# EUROPÄISCHE PATENTSCHRIFT

(11) **EP 3 727 814 B1**
(45) Veröffentlichungstag und Bekanntmachung des Hinweises auf die Patenterteilung: **02.07.2025**
(21) Anmeldenummer: 18827004.5
(22) Anmeldetag: 13.12.2018
(51) Int. Cl.: B29C 70/60, B29C 70/64, B29C 70/08

(54) **KRATZFESTE LEICHTBAUPLATTE**
SCRATCH-PROOF LIGHTWEIGHT CONSTRUCTION PANEL
PANNEAU LÉGER RÉSISTANT AUX RAYURES

(30) Priorität: 19.12.2017 DE 102017130606
(43) Veröffentlichungstag der Anmeldung: 28.10.2020
(73) Patentinhaber: VINCORION Advanced Systems GmbH, 22880 Wedel (DE)
(72) Erfinder: ULKEN, Ulf-Dieter, 21220 Seevetal-Horst (DE)
(74) Vertreter: Aurigium Leischner & Luthe
(86) Internationale Anmeldenummer: PCT/EP2018/084760
(87) Internationale Veröffentlichungsnummer: WO 2019/121323

(56) Entgegenhaltungen:
- EP-A2- 0 259 868
- DE-U1- 29 522 267
- JP-B2- 4 789 672
- US-A- 5 288 353
- US-A- 5 391 425
- US-A- 5 558 932
- US-A1- 2009 117 368
- US-A1- 2010 024 336
- US-A1- 2013 225 321
- US-A1- 2017 182 719

## Beschreibung

Die Erfindung betrifft ein Verfahren zur Herstellung einer Leichtbauplatte, mit den Schritten:
Herstellen einer faserverstärkten Grundplatte indem ein Fasermaterial in ein Grundmatrixmaterial eingebettet und mit dem Grundmatrixmaterial mechanisch verbunden wird,
Herstellen und Aufbringen einer Beschichtung auf eine Oberfläche der Grundplatte. Weiterhin betrifft die Erfindung ein Plattenmaterial, umfassend: eine faserverstärkte Grundplatte mit einem Fasermaterial, das in ein Grundmatrixmaterial eingebettet und mit dem Grundmatrixmaterial mechanisch verbunden ist, eine Beschichtung auf eine Oberfläche der Grundplatte,

Plattenmaterial der vorgenannten Art und entsprechende Verfahren zu deren Herstellung haben Bedeutung in verschiedenen Bereichen der Technik. Häufig wird solches Plattenmaterial als Auskleidungsmaterial oder Verkleidungsmaterial im Fahrzeugbau eingesetzt, beispielsweise bei schienengebundenen Fahrzeugen, Reisebussen, Luftfahrzeugen oder Straßenfahrzeugen. Ein anderes Anwendungsgebiet sind Kanäle oder Verkleidungen im Innenbereich von Gebäuden oder für Fassaden von Gebäuden.

Die US 2017/0182719 A1 offenbart ein Verfahren zur Erzeugung einer Kompositstruktur mit einem Oberflächenfilm gemäß dem Oberbegriff des Anspruchs 1.

Der Oberflächenfilm umfasst insbesondere eine Novolac-Epoxidharzstruktur, keramische Partikel, einen Härter auf Aminbasis und einen anorganischen Füllstoff. Die US 5,391,425 offenbart ein faserverstärktes Kompositmaterial und ein entsprechendes Herstellungsverfahren.

Grundsätzlich wird bei diesen Anwendungen geschätzt, dass das Plattenmaterial leicht, korrosionsunempfindlich und zugleich mit ausreichender Steifigkeit ausgerüstet ist. Zugleich ermöglicht das Herstellungsverfahren eine kostengünstige Produktion in Massenproduktionsverfahren, wodurch die finanzielle Verfügbarkeit für viele Anwendungsgebiete gegeben ist.

Ein solches Plattenmaterial ist in seiner Grundstruktur zunächst auf bestimmte mechanische Eigenschaften nämlich Biegefestigkeit, Zugfestigkeit, Impaktfestigkeit und Druckfestigkeit ausgelegt und kann in der Regel in diesen Eigenschaften durch entsprechende Auswahl von Matrixmaterial und Fasermaterial entsprechend ausgelegt werden.

In einer typischen Anwendung wird eine solche Leichtbauplatte als Fußbodenplatte mit Teppichen oder sonstigen Belägen beklebt. Ein solcher Teppich oder Belag unterliegt ei nem gewissen Verschleiß, was in regelmäßigen zeitabständen einen Austausch erforderlich macht. In anderen Anwendungsfällen kann die Leichtbauplatte mit einer Dekorfolien oder dergleichen als Belag beklebt werden. Auch hierbeitritt der Bedarf auf, dass diese Beläge aus dekorativen Gründen ausgetauscht werden müssen, beispielsweise wenn ein Flugzeug- bzw. Fahrzeuginnenraum ein neues Kabinendesign erhalten soll.

Beim Austausch kommt es, obwohl dies in der Regel durch Arbeitsvorschriften nicht zugelassen ist, vor, dass Schneidwerkzeuge wie Cuttermesser eingesetzt werden, sei es, um die Entfernung des alten Teppichs/Belags damit zu vereinfachen oder um die passgenaue Verklebung des neuen Teppichs/Belags zu erreichen. So können beispielsweise die Teppiche/Beläge in Streifen aufgeschnitten werden, um diese dann als Streifen einfacher abreißen zu können.

Bei diesem Einschneiden kommt es jedoch häufig zur Einritzung oder gar teilweisen Durchtrennung der darunterliegenden Verbundwerkstoffe. Insbesondere können hierbei Kerbwirkungen oder Querschnittsverringerungen in der Oberfläche verursacht werden, wodurch die Leichtbauplatte Festigkeit und Steifigkeit einbüßt.

Grundsätzlich ist es wünschenswert, mechanische Beschädigungen der Oberfläche von solchen Plattenmaterialien möglichst gering zu halten oder zu verhindern, da durch solche mechanischen Beschädigungen die strukturelle Integrität der Platte gefährdet werden könnte, wenn ganze Layer (Lagen) von Fasermaterial durchschnitten würden Allerdings können übliche Maßnahmen wie der Einsatz beständiger Werkstoffe bei solchen Plattenmaterialien nicht zum Zuge kommen, da hierdurch die Platten zu schwer würden.

Vor diesem Hintergrund besteht ein Bedarf für ein Plattenmaterial, das in Gebrauch auch langfristig seine strukturelle Integrität aufrechterhält und zugleich mit einer kostengünstigen Herstellungsweise bereitgestellt werden kann. Dabei ist es bevorzugt, wenn die Gewichtsvorteile der Leichtbauplatte nicht oder nur wenig verringert werden.

Dieses Problem wird erfindungsgemäß mit einem Verfahren gemäß Anspruch 1 gelöst.

Durch die eingebrachten Partikel wird jegliches Schneidwerkzeug, z.B. die erwähnten Cutter Messer nach wenigen Zentimeter Schnittlänge stumpf geschliffen, wodurch eine weitere Beschädigung des darunterliegenden Laminates insbesondere der Fasern des Laminates, verhindert oder zumindest vermindert wird.

Die erfindungsgemäße faserverstärkte Grundplatte kann eine massive faserverstärkte Platte sein, kann aber auch als Sandwichplatte aufgebaut sein, die also aus einer Decklage und einer Unterlage oder typischerweise aus zwei Decklagen, die eine Mittellage zwischen sich einschließen, aufgebaut ist. Die Unterlage bzw. die Mittellage ist hierbei typischerweise aus einem leichten, mechanisch weniger belastbaren Material ausgebildet als die Decklage(n). Die Decklagen sind typischerweise faserverstärkte Materialien, die Mittellage bzw. Unterlage kann beispielsweise eine Wabenstruktur mit luftgefühlten Hohlräumen sein. Bei dieser Ausgestaltung wird dann die erfindungsgemäße Beschichtung auf die außenliegenden Oberflächen der Decklage aufgebracht.

Erfindungsgemäß wird eine Beschichtung aufgebracht, indem keramische Partikel in ein Schichtmatrixmaterial eingebettet werden und damit mechanisch verbunden werden. Die keramischen Partikel werden dabei in das Schichtmatrixmaterial eingeschlossen, worunter zu verstehen ist, dass die keramischen Partikel von dem Schichtmatrixmaterial allseitig umschlossen sind oder, sofern sie im Bereich einer Oberfläche der Beschichtung zu liegen, nahezu allseitig umschlossen sind mit Ausnahme eines geringen Oberflächenbereichs des Partikels, welcher der Umgebung zugewandt ist. Unter keramischen Partikeln sind hierbei Körper mit geringer Abmessung zu verstehen, die beispielsweise gehäuft in Pulver- oder in Granulatform vorliegen, also grundsätzlich schüttfähig sind. Ein Partikel für die erfindungsgemäße Anwendung weist vorzugsweise ein ausgewogenes Verhältnis von Höhe, Breite und Tiefe aus, mit beispielsweise etwa gleichen Abmessungen in den drei Raumrichtungen, kann aber auch eine in einer oder zwei Richtungen gestreckte Form als Stab- oder Plättchenform aufweisen, wobei das Verhältnis zum Erreichen der erfindungsgemäßen Ziele vorzugsweise 1 zu 2 bis 1 zu 5 nicht überschreitet. Als keramisches Material wird ein Material verstanden, dass in Abgrenzung zu Kunststoff oder Metall aus einer Keramik besteht, beispielsweise einer Oxidkeramik, einer Karbidkeramik oder einer Nitridkeramik. Die Beschichtung wird durch stoffschlüssiges Verbinden der Beschichtung mit der Grundplatte aufgebracht und mechanisch befestigt, wobei ein stoffschlüssiges Verbinden des Schichtmatrixmaterials mit dem Grundmatrixmaterial erfolgt. Die Anbindung der Beschichtung resultiert daher in mechanisch primärer Wirkung aus der adhäsiven Verbindung zwischen dem Schichtmatrixmaterial und dem Grundmatrixmaterial, die bei gegebenenfalls übereinstimmenden chemischen Eigenschaften der beiden Matrixmaterialien auch als kohäsive Verbindung ausgebildet sein kann. Eine stoffschlüssige Verbindung wird hierbei als eine Verbindung verstanden, die ihre mechanische Verbindungskraft durch adhäsive oder kohäsive Kräfte bezieht. Die stoffschlüssige Verbindung nach der Erfindung schließt nicht aus, dass zusätzlich andere, unterstützende Verbindungsmechanismen vorhanden sind, beispielsweise formschlüssige Verbindungsmechanismen oder kraftschlüssige Verbindungsmechanismen, die zwischen der Beschichtung und der Oberplatte durch entsprechende geometrische Gestaltungen im Übergangsbereich zwischen Schicht und Grundplatte ausgeführt sein können.

Gemäß einer ersten bevorzugten Ausführungsform ist vorgesehen, dass die keramischen Partikel eine Korngröße von mehr als 10µm, vorzugsweise mehr als 20µm, insbesondere mehr als 30µm, und/ oder von weniger als 300µm, weniger als 150µm oder vorzugsweise weniger als 75µm, insbesondere weniger als 50µm aufweisen. Gemäß dieser Ausführungsform weisen die keramischen Partikel eine minimale Korngröße und oder eine maximale Korngröße auf. Unter einer Korngröße ist hierbei allgemein zu verstehen, dass die Korngröße die Abmessung des Korns in einer beliebigen Richtung definiert, das Korn also im Fall einer minimalen Korngröße in keiner der Richtungen kleiner als die minimale Korngröße ist und im Fall einer maximalen Korngröße in keiner der Richtungen größer als die maximal Korngröße ist. Durch den so definierten Korngrößenbereich wird eine besonders günstige Festigkeit der Beschichtungen gegenüber mechanischen Einwirkungen wie Kratzern oder erosiven Einflüssen erzielt, ohne das hierdurch die mechanische Anhaftung der Schicht an der Grundplatte beeinträchtigt wird.

Bevorzugt eingesetzt werden kann eine Mischung aus verschiedenen Korngrößen innerhalb dieser Bereichsgrenzen, wobei unter verschiedenen Korngrößen eine nicht monomodale Mischung von Korngrößen verstanden wird. Eine solche nicht-monomodale Mischung kann sich beispielsweise als Mischung aus zwei unterschiedlichen monomodalen Kornmischungen zusammensetzen, sie kann auch durch eine breite, sich von der unteren bis zur oberen Bereichsgrenze erstreckende Gauß'sche Verteilung dargestellt werden, wobei zu verstehen ist, dass eine Korngrößenverteilung mit einer für die jeweiligen Körner typischen Gaußverteilung nicht als Mischung verschiedener Korngrößen verstanden wird. Die Verwendung einer Mischung aus verschiedenen Korngrößen hat den Vorteil, dass sich kleinere Partikel in die Lücken zwischen größeren Partikeln setzen können und hierdurch eine dichte Packung der Körner entsteht, die einen besonders guten Schnittschutz ergibt. Noch weiter ist es bevorzugt, wenn das Grundmatrixmaterial und das Schichtmatrixmaterial identisch sind. Durch eine identische Gestaltung von Grundmatrixmaterial und Schichtmatrixmaterial kann einerseits eine mechanisch besonders belastbare stoffschlüssige Verbindung zwischen den beiden Matrixmaterialien erreicht werden, insbesondere eine hochbelastbare Verbindung oder, sofern das Grundmatrixmaterial während des Aufbringens der Beschichtung in einen chemisch aktiven Zustand versetzt wird, beispielsweise durch einen Anlösungsvorgang oder einen Aufschmelzungsvorgang, auch kohäsive Verbindungsmechanismen.

Neben einem identischen Grundmatrixmaterial und Schichtmatrixmaterial können auch Grundmatrixmaterial und Schichtmatrixmaterial verschieden, jedoch mit einem übereinstimmenden Lösungsmittel anlösbar sein oder verschieden, aber einen übereinstimmenden Schmelzpunkt aufweisen. Mit dieser Fortbildung wird jeweils erreicht, dass sowohl das Grundmatrixmaterial als auch das Schichtmatrixmaterial durch Anlösen beziehungsweise Erwärmen in einen chemisch oder physikalisch aktiven Zustand versetzt werden können, der die feste Verbindung zwischen der Grundplatte und der Beschichtung befördert.

Noch weiter ist es bevorzugt, wenn das Herstellen und Aufbringen der Beschichtung eine Erwärmung des Schichtmatrixmaterials umfasst. Gemäß dieser Ausführungsform erfolgt beim Herstellen und Aufbringen der Beschichtung eine Erwärmung des Schichtmatrixmaterials, wodurch entweder eine physikalische Aktivierung zur Erzielung einer besseren Anbindung erreicht wird oder ein Anschmelzen oder vollständiges Aufschmelzen des Schichtmatrixmaterials erreicht wird, um eine bessere Verbindung zu erzielen.

Gemäß dem unabhängigen Verfahrensanspruch umfasst das Herstellen und Aufbringen der Beschichtung ein Aufbringen des Schichtmatrixmaterials auf die Oberfläche der Grundplatte und ein darauffolgendes Aufbringen der keramischen Partikel auf das Schichtmatrixmaterial umfasst, wobei das Schichtmatrixmaterial zumindest zu Beginn des Aufbringens der keramischen Partikel nicht ausgehärtet ist. Gemäß dieser Ausführungsform erfolgt dass Aufbringen des Schichtmatrixmaterials und das Aufbringen der keramischen Partikel zeitversetzt. Demgemäß erfolgt zumindest zu Beginn des Aufbringens des Schichtmatrixmaterials keine Aufbringung der keramischen Partikel was folglich eine Vorabmischung des Schichtmatrixmaterials mit den keramischen Partikeln für diese Anfangsphase ausschließt. Dies bewirkt eine besonders günstige, nicht von keramischen Partikeln unterbrochene Grenzschicht zum Grundmatrixmaterial, also der Oberfläche der Grundplatte und befördert dadurch die Anhaftung. In einem zeitlich nachfolgenden Schritt können dann die keramischen Partikel aufgebracht werden. Dies kann nach vollständigem Abschluss des Aufbringens des Schichtmatrixmaterials erfolgen oder kann sich mit dem Aufbringen des Schichtmatrixmaterials vollständig überschneiden. Ebenso kann das Aufbringen der keramischen Partikel sich nur teilweise mit dem Aufbringen des Schichtmatrixmaterials überschneiden, so dass auch nach Abschluss des Aufbringens des Schichtmatrixmaterials noch keramische Partikel aufgebracht werden, was in diesem Fall auf die Oberfläche des Schichtmatrixmaterials erfolgt. Grundsätzlich wird durch diese Verfahrensausgestaltungen eine Erhöhung der Partikeldichte, also der Anzahl der Partikel pro Volumeneinheit in der Beschichtung in einer Richtung ausgehend von der Grenzschicht zum Grundmaterial erreicht. Die Partikeldichte kann hierdurch insbesondere an der zur Umgebung weisenden Oberfläche der Beschichtung besonders hoch ausgeführt werden, was eine besonders günstige Eigenschaft gegenüber mechanischen Einwirkungen wie Kratzern und Erosionseffekten erreicht. Insbesondere kann mit diesem modifizierten Herstellungsverfahren eine graduelle Erhöhung der Partikeldichte erreicht werden, bei der die Partikeldichte ausgehend von der Grenzschicht zum Grundmaterial mit zunehmendem Abstand von dieser Grenzschicht in der Beschichtung steigt.

Noch weiter ist es bevorzugt, wenn die keramischen Partikel eine Mohshärte größer 6, vorzugsweise größer 7, insbesondere größer 8 oder größer als 9 aufweisen. Es hat sich gezeigt, dass keramische Partikel mit einer Mohshärte in diesem Bereich besonders günstige Eigenschaften gegenüber mechanischen Einwirkungen bereitstellen, die beispielsweise auch durch gehärtete Stahlklingen erzeugt werden, und zugleich noch eine gute Anbindung im Schichtmatrixmaterial erzielen, ohne die Gefahr einer Versprödung und Herauslösung der Partikel auf Grund der durch Inhomogenität oder ungleiche chemische Eigenschaften hervorgerufenen Spannungen.

Gemäß den unabhängigen Ansprüchen sind die keramischen Partikel ein Metallkarbid oder Metalloxid. Das Schichtmatrixmaterial ist ein Duromer.

Diese Auswahl für die keramischen Partikel und für das Schichtmatrixmaterial eignet sich besonders gut um eine belastbare Anbindung der Partikel innerhalb des Schichtmatrixmaterials einerseits zu erzielen und andererseits eine gute Anbindung zwischen dem Schichtmatrixmaterial und dem Grundmatrixmaterial zu erreichen. Insbesondere kann hierbei das Schichtmatrixmaterial und das Grundmatrixmaterial übereinstimmend oder hinsichtlich Schmelzpunkt oder Anlösbarkeit mit einem Lösungsmittel übereinstimmend ausgeführt sein.

Noch weiter ist es bevorzugt, wenn die keramischen Partikel mit einem Volumenanteil von mehr als 60% oder mehr als 70% vorzugsweise im Bereich von 75% bis 85% des Volumens der Beschichtung in die Beschichtung eingebracht werden. Gemäß dieser Ausgestaltung wird ein signifikant hoher Volumenanteil an keramischen Partikel in der Beschichtung bereitgestellt, wobei zu verstehen ist, dass 60% bzw. 70% oder mehr bzw. 75% bis 85% des Volumens der Beschichtung durch das Volumen der Partikel in der Beschichtung bereitgestellt wird. Dabei ist grundsätzlich zu verstehen, dass dieser Volumenanteil als Mittelwert des Volumenanteils der Partikel in der Schicht verstanden wird, so dass bei beispielsweise graduellen Aufbau der Schicht auch ein höherer Volumenanteil der Partikel in bestimmten Bereichen der Schicht, gepaart mit einem entsprechenden niedrigerem, auch unter 60% liegenden Volumenanteil der Partikel in anderen Bereichen der Schicht unter dieser Fortbildung fällt.

Gemäß einer weiteren bevorzugten Ausführungsform ist vorgesehen, dass die Beschichtung auf die Oberfläche einer Werkstückform aufgebracht wird und nachfolgend das Grundmatrixmaterial in die Werkstückform eingebracht wird und mit der Beschichtung verbunden wird. Gemäß dieser Ausbildung wird die Beschichtung auf eine Oberfläche einer Werkstückform aufgebracht, also insbesondere auf eine Innenseite einer Werkstückform, wobei die Werkstückform dazu dient, um das gesamte Bauteil herzustellen. Diese Oberfläche kann plan oder gekrümmt sein, je nach gewünschter Geometrie des Werkstücks beziehungsweise Plattenmaterials, das damit hergestellt werden soll. Das Auftragen der Beschichtung auf die Oberfläche einer Werkstückform hat den Vorteil, dass hierdurch eine definierte Oberfläche der Beschichtung hergestellt werden kann, die in der späteren Nutzung zur Umgebung weist. Diese definierte Oberfläche wird durch die Oberfläche der Werkstückform definiert und kann besonders glatt oder mit einer beabsichtigten Struktur ausgeführt sein. Das Herstellungsverfahren ähnelt dem sogenannten Gelcoat-Verfahren, dass für die Herstellung von Bootsrümpfen bekannt ist, weist aber in der erfindungsgemäßen Einsatzweise den Vorteil auf, dass die in die Beschichtung eingebetteten Partikel hierdurch in vorteilhafter Weise in die Beschichtung integriert werden, nicht daraus hervorstehen und dadurch eine günstige Oberflächeneigenschaft erzielt werden kann. Die Herstellung kann hierbei in einem sogenannten Nass-in-Nass-Verfahren erfolgen, bei dem also die Beschichtung zu dem Zeitpunkt, zu dem das Grundmatrixmaterial aufgebracht wird, noch nicht vollständig ausgehärtet ist, also noch zur Ausbildung einer stoffflüssigen Verbindung reaktionsfreudig ist. Gegebenenfalls kann hierzu eine Erwärmung der Oberfläche erfolgen, um die Haftung zum Grundmatrixmaterial zu verbessern. Alternativ kann die Verbindung zwischen Grundmatrixmaterial und der Beschichtung auch nach vollständiger Aushärtung der Beschichtung in der Werkstückform erfolgen.

Ein weiterer Aspekt der Erfindung ist ein Plattenmaterial gemäß dem unabhängigen Materialanspruch.

Die Grundplatte kann vorzugsweise mit dem Verfahren der zuvor beschriebenen Art hergestellt werden. Das Plattenmaterial zeichnet sich dadurch aus, dass eine faserverstärkte Grundplatte mit einer Beschichtung versehen ist, die keramische Partikel aufweist, die in einem Schichtmatrixmaterial eingebettet und mit diesem verbunden sind. Hierdurch wird eine gegenüber mechanischen Einwirkungen robuste und resistente Schicht auf der Grundplatte erzeugt. Die Beschichtung ist dabei stoffschlüssig mit der Grundplatte verbunden, was durch eine stoffschlüssige Verbindung zwischen Schichtmatrixmaterial und Grundmatrixmaterial erzielt wird. Dies bewirkt, dass die Beschichtung durch mechanische Einwirkungen üblicher Größenordnung nicht von der Grundplatte abgelöst wird und daher die mechanische Schutzwirkung dauerhaft bereitstellt.

Das erfindungsgemäße Plattenmaterial kann fortgebildet werden, indem die keramischen Partikel eine Korngröße von mehr als 10µm, vorzugsweise mehr als 20µm, insbesondere mehr als 30µm, und/ oder von weniger als 300µm, vorzugsweise weniger als 75µm, insbesondere weniger als 50µm, aufweisen.

Weiterhin können das Plattenmaterial fortgebildet werden, indem das Grundmatrixmaterial und das Schichtmatrixmaterial identisch sind.

Eine weitere Fortbildung sieht vor, dass die Beschichtung ein Gewebematerial umfasst.

Gemäß dem unabhängigen Materialanspruch umfasst die Beschichtung eine zu der Oberfläche der Grundplatte weisende Schichtlage und eine Beschichtungsoberfläche, die der Oberfläche der Grundplatte gegenüberliegt, aufweist, und dass im Bereich der Beschichtungsoberfläche ein Volumenanteil der keramischen Partikel in der Beschichtung größer ist, insbesondere mindestens doppelt so groß ist wie ein Volumenanteil der keramischen Partikel in der Beschichtung in der zur Grundplatte weisenden Schichtlage.

Schließlich sieht eine weitere Fortbildung vor, dass das Plattenmaterial nach einem Verfahren oder einem der Verfahrensmerkmale hergestellt wird, die zuvor beschrieben wurden.

Es ist bezüglich des Plattenmaterials und den dazu erläuterten Fortbildungen grundsätzlich zu verstehen, dass die Eigenschaften, Merkmale und Vorteile dieses Plattenmaterials denjenigen entsprechen, die zuvor in Bezug auf die entsprechenden, hierzu korrespondierenden Verfahrensmerkmale des Herstellungsverfahrens für ein Plattenmaterial beschrieben wurden.

Eine bevorzugte Ausführungsform wird anhand der beiliegenden Figuren beschrieben. Es zeigen:
Figur 1 eine erste Ausführungsform, die nicht unter den Ansprüchen fällt.
Figur 2 eine zweite Ausführungsform der Erfindung und
Figur 3 eine dritte Ausführungsform der Erfindung.

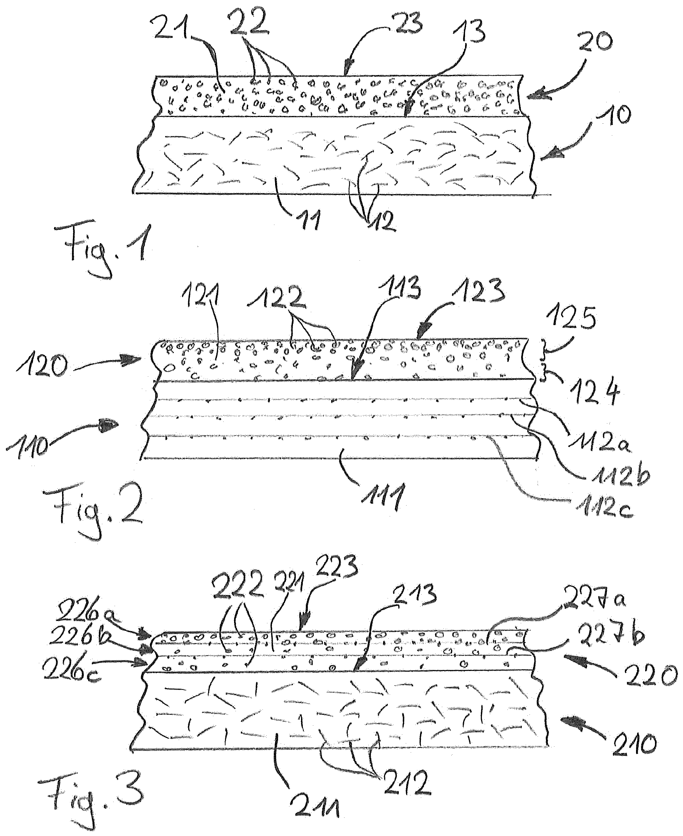

In Figur 1, die nicht unter den Ansprüchen fällt, ist ein Ausschnitt eines mit einer Beschichtung versehenden Plattenmaterials in einer geschnittenen Seitenansicht symbolisch dargestellt. Grundsätzlich ist zu verstehen, dass die Dicke der Beschichtung in Figur 1 und den Figuren 2 und 3 nicht maßstabsgetreu in Bezug auf die Dicke der Grundplatte wiedergegeben ist, sondern zur besseren Erläuterung ohne Maßstab vergrößert dargestellt ist. Grundsätzlich kann das Verhältnis zwischen der Dicke der Beschichtung und der Dicke der Grundplatte bei der Erfindung in einem großen Bereich ausgeführt sein, beispielsweise in einem Bereich von 1 zu 25 bis 1 zu 100 und kann, bei schwankender bei variierender Dicke der Grundplatte auch an einem Werkstück variabel sein, insbesondere kann die Dicke der Beschichtung für das gesamte Werkstück im Wesentlichen konstant sein, für die Grundplatte jedoch lokal verschieden ausgeführt sein.

Die Grundplatte 10 ist im Ausführungsbeispiel gemäß Figur 1 als ebene Platte ausgebildet und besteht aus einem Grundmatrixmaterial 11 und darin eingebetteten, nicht orientierten Kurzfasern 11. Die Grundplatte weist eine Oberfläche 12 auf, auf die eine Beschichtung 20 aufgebracht ist. Die Beschichtung 20 besteht wiederum aus einem Beschichtungsmatrixmaterial 21 und darin eingebetteten keramischen Partikeln 22. Zwischen der Beschichtung und der Grundplatte ist eine stoffflüssige Verbindung durch adhäsive Kräfte, die im Wesentlichen zwischen dem Grundmatrixmaterial und dem Beschichtungsmatrixmaterial wirken, ausgebildet. Die Partikel 22 sind homogen im Schichtmatrixmaterial verteilet, so dass in jeder Schichtebene, also in jeder Tiefe der Schicht als auch an jedem Ort der Schicht eine im Wesentlichen gleiche Partikeldichte im Sinne einer Anzahl von Partikeln pro Volumeneinheit der Beschichtung vorliegt. Die Beschichtung weist eine Oberfläche 23 auf, die parallel zur Oberfläche 13 der Grundplatte liegt und ebenfalls im Wesentlichen plan und glatt ausgebildet ist.

Figur 2 zeigt eine zweite Ausführungsform, bei der die grundsätzliche Geometrie von Beschichtung und Grundplatte übereinstimmend zur Figur 1 ausgeführt sind. Die Grundplatte 110 ist bei dieser Ausführungsform als gewebeverstärkter Verbundwerkstoff ausgeführt mit drei Gewebelagen 112a, b, c, die in ein Grundmatrixmaterial 111 eingebettet sind. Die Gewebelagen 112a, b, c liegen im Ausführungsbeispiel parallel zueinander, können aber auch in unterschiedlichen Ausrichtungen zueinander im Grundmatrixmaterial eingebettet sein.

Die Grundplatte 110 weist wiederum eine Oberfläche 113, auf die eine Beschichtung 120 aufgebracht und stoffflüssig befestigt ist. Die Beschichtung weist ein Schichtmatrixmaterial 121 auf, in welches keramische Partikel 122 eingebettet sind. Die Beschichtung 120 weist eine zur Umgebung weisende Oberfläche 123 auf.

Die Beschichtung 120 weist eine benachbart zur Oberfläche 123 liegende obere Schichtebene 124 und eine zur Oberfläche 113 der Grundplatte benachbarte untere Schichtebene 125 auf. In der oberen Schichtebene 124 liegen die Partikel mit einer hohen Partikeldichte vor, das heißt es sind viele Partikel pro Volumeneinheit der Beschichtung eingebettet. In der unteren Schichtebene 125 ist demgegenüber eine geringere Partikeldichte vorhanden. Die Partikeldichte ändert sich von der Oberfläche 123 zu der Oberfläche 113 kontinuierlich oder graduell, so dass kein scharfer Übergang zwischen der hohen Partikeldichte im Bereich der Oberfläche 123 und der geringeren Partikeldichte im Bereich der Oberfläche 113 vorhanden ist.

Die in Figur 2 gezeigte Verteilung der Partikeldichte innerhalb der Beschichtung kann fertigungstechnisch auf verschiedene Weise erreicht werden. Grundsätzlich spielt hierbei regelmäßig die Viskosität des Schichtmatrixmaterials, das Dichteverhältnis der Partikel zu dem Schichtmatrixmaterial und der zeitliche Aushärtungsverlauf des Schichtmatrixmaterials nach dem Zeitpunkt der Zugabe der Partikel eine Rolle. Grundsätzlich kann gemäß eines ersten Fertigungsverfahrens die unterschiedliche Partikeldichte in der Beschichtung dadurch erzielt werden, dass in einem ersten Fertigungsschritt das Schichtmatrixmaterial auf die Grundplatte aufgetragen wird, in einem zweiten, hierauf folgenden Schritt, die Partikel auf die Oberfläche 123 aufgebracht werden und dann - beispielsweise Schwerkraft bedingt - in die Beschichtung eindringen. Dieser Schwerkraft bedingte Eindringprozess der Partikel kann alternativ auch durch andere Krafteinwirkungen, beispielsweise durch Zentrifugalkräfte, bewirkt werden. Der Zeitpunkt der Zugabe der Partikel in Bezug auf den Verlauf der Viskosität des Schichtmatrixmaterials nach dieser Zugabe bis zum vollständigen Aushärten beziehungsweise Erreichen einer Viskosität, bei der die Partikel sich nicht weiter im Schichtmatrixmaterial sich bewegen können, ist ausschlaggebend für den Verlauf der Partikeldichte. Grundsätzlich kann der Zeitpunkt des Aufbringens der Partikel auf die Oberfläche solcher Art gewählt sein, dass nach diesem Zeitpunkt ein Zeitintervall bis zum Aushärten des Schichtmatrixmaterials verbleibt, dass ein partielles Eindringen der Partikel in das Schichtmatrixmaterial bewirkt und hierdurch die unterschiedliche Partikeldichte mit einer höheren Partikeldichte an der Oberfläche der Beschichtung und einer geringeren Partikeldichte in der Tiefe der Beschichtung herbeiführt.

Eine alternative Herstellungsmethode ist bei einem Auftrag des Schichtmatrixmaterials in eine Werkstückform möglich. In diesem Fall können die Partikel bereits mit dem Schichtmatrixmaterial vorgemischt sein, bevor der Auftrag in die Werkstückform erfolgt oder die Partikel können wiederum nach dem Auftrag des Schichtmatrixmaterials in die Werkstückform auf das Schichtmatrixmaterial aufgebracht werden. In diesem Fall des Fertigungsprozesses ist ein Bewegen der Partikel bis zur Schichtoberfläche 123 verstärkt gewünscht und kann durch Schwerkraft oder sonstige Kräfte herbeigeführt werden. Durch eine entsprechend lange Beweglichkeit der Partikel in dem Schichtmatrixmaterial kann ein Sammeln der Partikel an der Oberfläche 123 erreicht werden und hierdurch die Partikeldichte in der Tiefe der Schicht gegenüber der Partikeldichte an der Oberfläche der Schicht verringert werden. Der Zeitpunkt der Aushärtung des Schichtmatrixmaterials beziehungsweise des Erreichens einer so hohen Viskosität, dass keine Partikelbeweglichkeit innerhalb des Schichtmatrixmaterials mehr besteht, wird in diesem Fall so gewählt, dass zu diesem Zeitpunkt noch Partikel in der Tiefe der Schicht vorhanden sind, ein überwiegender Teil der Partikel sich jedoch bis zur Oberfläche 123 der Beschichtung bewegt hat und hierdurch die unterschiedliche Partikeldichte erzielt ist.

Figur 3 zeigt eine dritte Ausführungsform der Erfindung. Bei dieser Ausführungsform ist die Grundplatte 210 übereinstimmend zur Grundplatte 10 der ersten Ausführungsform gemäß Figur 1 ausgeführt und weist ein Grundmatrixmaterial 211 mit unorientiert darin angeordneten Kurzfasern 212 auf. Die Grundplatte weist wiederum eine Oberfläche 213 auf, auf die eine Beschichtung 220 aufgebracht ist.

Die Beschichtung 220 ist als Prepreg vorgefertigt worden und weist zwei Faserverstärkungslagen 227a, b auf. Die Faserverstärkungslagen 227a, b sind eingebettet in ein Schichtmatrixmaterial 221. Weiterhin sind keramische Partikel 222 in das Schichtmatrixmaterial 221 eingebettet.

Die Faserverstärkungslagen 227a, b unterteilen die Beschichtung 220 in drei Schichtebenen 226a,b,c. Die oberste Schichtebene 226a liegt hierbei benachbart und anschließend an eine Beschichtungsoberfläche 223. Diese oberste Schichtebene 226a weist eine hohe Partikeldichte auf.

Die mittlere Schichtebene 226b liegt zwischen den beiden Faserverstärkungslagen 227a, b und weist eine geringere Partikeldichte auf als die obere Schichtebene 226a.

Die untere Schichtebene 226c liegt zwischen der Oberfläche 213 und der unteren Faserverstärkungslage 227b. Die untere Schichtebene 226c weist eine geringere Partikeldichte auf als die mittlere Schichtebene 226b.

Die Herstellung der unterschiedlichen Partikeldichten in den Schichtebenen 226a, b,c erfolgt durch entsprechendes Eindringen unterschiedlicher Partikelmengen in die Schichtebenen beim Herstellen des Prepregs. Die Faserverstärkungslagen 227a, b wirken hierbei als Membran und verhindern den Durchtritt von Partikeln von einer Schichtebene in die andere.

## Patentansprüche

1. Verfahren zur Herstellung einer Leichtbauplatte, mit den Schritten:
- Herstellen einer faserverstärkten Grundplatte (10, 110, 210) indem ein Fasermaterial (12, 122, 212) in ein Grundmatrixmaterial (11, 111, 211) eingebettet und mit dem Grundmatrixmaterial (11, 111, 211) mechanisch verbunden wird,
- Herstellen und Aufbringen einer Beschichtung (20, 120, 220) auf eine Oberfläche der Grundplatte (10, 110, 210),
wobei
- das Herstellen und Aufbringen der Beschichtung (13, 20) ein Einbetten keramischer Partikel (22, 122, 222) in ein Schichtmatrixmaterial (21, 121, 221) und Verbinden der keramischen Partikel (22, 122) mit dem Schichtmatrixmaterial (121) einschließt, und
- das Aufbringen der Beschichtung ein stoffschlüssiges Verbinden der Beschichtung (13, 20) mit der Grundplatte (10, 110, 210), umfassend ein stoffschlüssiges Verbinden des Schichtmatrixmaterials (21, 121, 221) mit dem Grundmatrixmaterial (11, 111, 211), einschließt
wobei im Schritt des Herstellens und Aufbringens keramischen Partikel (22, 122, 222) aus einem ein Metallkarbid oder Metalloxid eingebracht werden und als Schichtmatrixmaterial (21, 121, 221) ein Duromer verwendet wird, **dadurch gekennzeichnet dass** das Herstellen und Aufbringen der Beschichtung ein Aufbringen des Schichtmatrixmaterials (21, 121, 221) auf die Oberfläche der Grundplatte (10, 110, 210) und ein darauffolgendes Aufbringen der keramischen Partikel (22, 122, 222) auf das Schichtmatrixmaterial (21, 121, 221) umfasst, wobei das Schichtmatrixmaterial (21, 121, 221) zumindest zu Beginn des Aufbringens der keramischen Partikel (22, 122, 222) nicht ausgehärtet ist.

2. Verfahren nach Anspruch 1,
**dadurch gekennzeichnet, dass** die keramischen Partikel (22, 122, 222) eine Korngröße
- von mehr als 10µm, vorzugsweise mehr als 20µm, insbesondere mehr als 30µm, und/ oder
- von weniger als 300µm, vorzugsweise weniger als 75µm, insbesondere weniger als 50µm,
aufweisen.

3. Verfahren nach Anspruch 1 oder 2, **dadurch gekennzeichnet, dass** Grundmatrixmaterial (11, 111, 211) und das Schichtmatrixmaterial (21, 121, 221) identisch sind.

4. Verfahren nach einem der vorhergehenden Ansprüche, **dadurch gekennzeichnet, dass** das Herstellen und Aufbringen der Beschichtung eine Erwärmung des Schichtmatrixmaterials (21, 121, 221) und/oder der einzubringenden Partikel (22, 122, 222) umfasst.

5. Verfahren nach einem der vorhergehenden Ansprüche, **dadurch gekennzeichnet, dass** die keramischen Partikel (22, 122, 222) eine Mohshärte größer 6, vorzugsweise größer 7, insbesondere größer 8 aufweisen.

6. Verfahren nach einem der vorhergehenden Ansprüche, **dadurch gekennzeichnet, dass** im Schritt des Herstellens und Aufbringens der Beschichtung eine zu der Oberfläche der Grundplatte (10, 110, 210) weisende Schichtlage und eine Beschichtungsoberfläche, die der Oberfläche der Grundplatte (10, 110, 210) gegenüberliegt, hergestellt wird, und dass im Bereich der Beschichtungsoberfläche ein Volumenanteil der keramischen Partikel (22, 122, 222) in der Beschichtung größer ausgestaltet wird, wie ein Volumenanteil der keramischen Partikel (22, 122, 222)in der Beschichtung in der zur Grundplatte (10, 110, 210) weisenden Schichtlage .

7. Verfahren nach einem der vorhergehenden Ansprüche, **dadurch gekennzeichnet, dass** die keramischen Partikel (22, 122, 222) mit einem Volumenanteil von mehr als 75% des Volumens der Beschichtung in die Beschichtung eingebracht werden.

8. Plattenmaterial, umfassend:
eine faserverstärkte Grundplatte (10, 110, 210) mit einem Fasermaterial (12, 122, 212), das in ein Grundmatrixmaterial (11, 111, 211) eingebettet und mit dem Grundmatrixmaterial (11, 111, 211) mechanisch verbunden ist,
eine Beschichtung auf eine Oberfläche der Grundplatte (10, 110, 210),
wobei
die Beschichtung ein Schichtmatrixmaterial (21, 121, 221) und keramische Partikel (22, 122, 222) umfasst, die in das Schichtmatrixmaterial (21, 121, 221) eingebettet und mit dem Schichtmatrixmaterial (21, 121, 221) verbunden sind, und das Schichtmatrixmaterial (21, 121, 221) stoffschlüssig mit dem Grundmatrixmaterial (11, 111, 211), verbunden ist,
wobei
die keramischen Partikel (22, 122, 222) aus einem ein Metallkarbid oder Metalloxid hergestellt sind und das Schichtmatrixmaterial (21, 121, 221) als ein Duromer ausgebildet ist, **dadurch gekennzeichnet**
**dass** die Beschichtung eine zu der Oberfläche der Grundplatte (10, 110, 210) weisende Schichtlage und eine Beschichtungsoberfläche, die der Oberfläche der Grundplatte (10, 110, 210) gegenüberliegt, aufweist, und dass im Bereich der Beschichtungsoberfläche ein Volumenanteil der keramischen Partikel (22, 122, 222) in der Beschichtung größer ist, insbesondere mindestens doppelt so groß ist wie ein Volumenanteil der keramischen Partikel (22, 122, 222) in der Beschichtung in der zur Grundplatte (10, 110, 210) weisenden Schichtlage.

9. Plattenmaterial nach Anspruch 8,
**dadurch gekennzeichnet, dass** die keramischen Partikel (22, 122, 222) eine Korngröße
- von mehr als 10µm, vorzugsweise mehr als 20µm, insbesondere mehr als 30µm, und/ oder
- von weniger als 300µm, vorzugsweise weniger als 75µm, insbesondere weniger als 50µm,
aufweisen.

10. Plattenmaterial nach Anspruch 8 oder 9, **dadurch gekennzeichnet, dass** das Grundmatrixmaterial (11, 111, 211) und das Schichtmatrixmaterial (21, 121, 221) identisch sind.

11. Plattenmaterial nach einem der vorhergehenden Ansprüche, **dadurch gekennzeichnet, dass** die Beschichtung ein Gewebematerial umfasst.

12. Verfahren nach einem der vorhergehenden Ansprüche, **dadurch gekennzeichnet, dass** die Beschichtung auf die Oberfläche einer Werkstückform aufgebracht wird und nachfolgend das Grundmatrixmaterial (11, 111, 211) in die Werkstückform eingebracht wird und mit der Beschichtung verbunden wird.

## Claims

1. Method for manufacturing a lightweight panel, comprising the steps:
- producing a fibre-reinforced base plate (10, 110, 210) by embedding a fibre material (12, 122, 212) in a base matrix material (11, 111, 211) and mechanically bonding it to the base matrix material (11, 111, 211),
- producing and applying a coating (20, 120, 220) to a surface of the base plate (10, 110, 210),
wherein
- producing and applying the coating (13, 20) includes embedding ceramic particles (22, 122, 222) in a layer matrix material (21, 121, 221) and bonding the ceramic particles (22, 122) to the layer matrix material (121), and
- applying the coating includes adhesively bonding the coating (13, 20) to the base plate (10, 110, 210), comprising adhesively bonding the layer matrix material (21, 121, 221) to the base matrix material (11, 111, 211),
wherein, in the step of producing and applying, ceramic particles (22, 122, 222) comprising a metal carbide or metal oxide are introduced, and a duromer is used as the layer matrix material (21, 121, 221),
**characterised in that** producing and applying the coating comprises applying the layer matrix material (21, 121, 221) to the surface of the base plate (10, 110, 210) and subsequently applying the ceramic particles (22, 122, 222) to the layer matrix material (21, 121, 221), wherein the layer matrix material (21, 121, 221) is not cured at least at the beginning of the application of the ceramic particles (22, 122, 222).

2. Method according to claim 1,
**characterised in that** the ceramic particles (22, 122, 222) have a grain size
- greater than 10µm, preferably greater than 20µm, in particular greater than 30µm, and/or
- less than 300µm, preferably less than 75µm, in particular less than 50µm.

3. Method according to claim 1 or 2,
**characterised in that** the base matrix material (11, 111, 211) and the layer matrix material (21, 121, 221) are identical.

4. Method according to one of the preceding claims,
**characterised in that** producing and applying the coating comprises heating the layer matrix material (21, 121, 221) and/or the particles (22, 122, 222) to be introduced.

5. Method according to one of the preceding claims,
**characterised in that** the ceramic particles (22, 122, 222) have a Mohs hardness greater than 6, preferably greater than 7, in particular greater than 8.

6. Method according to one of the preceding claims,
**characterised in that**, in the step of producing and applying the coating, a layer facing the surface of the base plate (10, 110, 210) and a coating surface facing the surface of the base plate (10, 110, 210) are produced, and that in the region of the coating surface, a volume fraction of the ceramic particles (22, 122, 222) in the coating is greater than a volume fraction of the ceramic particles (22, 122, 222) in the coating in the layer facing the base plate (10, 110, 210).

7. Method according to one of the preceding claims,
**characterised in that** the ceramic particles (22, 122, 222) are introduced into the coating with a volume fraction of more than 75% of the volume of the coating.

8. Plate material comprising:
a fibre-reinforced base plate (10, 110, 210) with a fibre material (12, 122, 212) embedded in a base matrix material (11, 111, 211) and mechanically bonded to the base matrix material (11, 111, 211),
a coating on a surface of the base plate (10, 110, 210),
wherein
the coating comprises a layer matrix material (21, 121, 221) and ceramic particles (22, 122, 222) embedded in the layer matrix material (21, 121, 221) and bonded to the layer matrix material (21, 121, 221), and
the layer matrix material (21, 121, 221) is adhesively bonded to the base matrix material (11, 111, 211),
wherein the ceramic particles (22, 122, 222) are made of a metal carbide or metal oxide, and the layer matrix material (21, 121, 221) is formed as a duromer,
**characterised in that** the coating has a layer facing the surface of the base plate (10, 110, 210) and a coating surface facing the surface of the base plate (10, 110, 210), and that in the region of the coating surface, a volume fraction of the ceramic particles (22, 122, 222) in the coating is greater than, in particular at least twice as large as, a volume proportion of the ceramic particles (22, 122, 222) in the coating in the layer facing the base plate (10, 110, 210).

9. Plate material according to claim 8,
**characterised in that** the ceramic particles (22, 122, 222) have a grain size
- of more than 10µm, preferably more than 20µm, in particular more than 30µm, and/or
- of less than 300µm, preferably less than 75µm, in particular less than 50µm.

10. Plate material according to claim 8 or 9,
**characterised in that** the base matrix material (11, 111, 211) and the layer matrix material (21, 121, 221) are identical.

11. Plate material according to one of the preceding claims,
**characterised in that** the coating comprises a fabric material.

12. Method according to one of the preceding claims,
**characterised in that** the coating is applied to the surface of a workpiece mould, and subsequently the base matrix material (11, 111, 211) is introduced into the workpiece mould and bonded to the coating.

## Revendications

1. Procédé de fabrication d'un panneau léger, comprenant les étapes suivantes :
- fabrication d'un plaque de base renforcé de fibres (10, 110, 210) en incorporant un matériau fibreux (12, 122, 212) dans un matériau de matrice de base (11, 111, 211) et en le liant mécaniquement au matériau de matrice de base (11, 111, 211),
- la fabrication et l'application d'un revêtement (20, 120, 220) sur une surface de la plaque de base (10, 110, 210),
dans laquelle
- la fabrication et l'application du revêtement (13, 20) comprennent l'incorporation de particules céramiques (22, 122, 222) dans un matériau de matrice de couche (21, 121, 221) et la liaison des particules céramiques (22, 122) avec le matériau matriciel en couche (121), et
- l'application du revêtement comprend une liaison par adhérence du revêtement (13, 20) avec la plaque de base (10, 110, 210), comprenant une liaison par adhérence du matériau de matrice de couche (21, 121, 221) avec le matériau de matrice de base (11, 111, 211),
dans l'étape de fabrication et d'application, des particules céramiques (22, 122, 222) constituées d'un carbure métallique ou d'un oxyde métallique sont introduites et un duromère est utilisé comme matériau de matrice de couche (21, 121, 221).
**caractérisé en ce que** la fabrication et l'application du revêtement comprennent une application du matériau de matrice de couche (21, 121, 221) sur la surface de la plaque de base (10, 110, 210) et une application consécutive des particules céramiques (22, 122, 222) sur le matériau de matrice de couche (21, 121, 221), le matériau de matrice de couche (21, 121, 221) n'étant pas durci au moins au début de l'application des particules céramiques (22, 122, 222).

2. Procédé selon la revendication 1,
**caractérisé en ce que** les particules céramiques (22, 122, 222) ont une granulométrie
- supérieure à 10µm, de préférence supérieure à 20µm, en particulier supérieure à 30µm, et/ou
- inférieure à 300µm, de préférence inférieure à 75µm, en particulier inférieure à 50µm.

3. Procédé selon la revendication 1 ou 2,
**caractérisé en ce que** le matériau de la matrice de base (11, 111, 211) et le matériau de la matrice de la couche (21, 121, 221) sont identiques.

4. Procédé selon l'une des revendications précédentes,
**caractérisé en ce que** la fabrication et l'application du revêtement comprennent un chauffage du matériau de la matrice de la couche (21, 121, 221) et/ou des particules à introduire (22, 122, 222).

5. Procédé selon l'une des revendications précédentes,
**caractérisé en ce que** les particules céramiques (22, 122, 222) présentent une dureté Mohs supérieure à 6, de préférence supérieure à 7, en particulier supérieure à 8.

6. Procédé selon l'une des revendications précédentes,
**caractérisé en ce que**, lors de l'étape de fabrication et d'application du revêtement, une couche orientée vers la surface de la plaque de base (10, 110, 210) et une surface de revêtement opposée à la surface de la plaque de base (10, 110, 210) sont réalisées, et dans la zone de la surface de revêtement, une proportion volumique des particules céramiques (22, 122, 222) dans le revêtement est supérieure à une proportion volumique des particules céramiques (22, 122, 222) dans le revêtement dans la couche tournée vers la plaque de base (10, 110, 210).

7. Procédé selon l'une des revendications précédentes,
**caractérisé en ce que** les particules céramiques (22, 122, 222) sont introduites dans le revêtement avec une proportion volumique supérieure à 75% du volume du revêtement.

8. Matériau en plaque, comprenant :
une plaque de base renforcée par des fibres (10, 110, 210) avec un matériau fibreux (12, 122, 212) qui est noyé dans un matériau de matrice de base (11, 111, 211) et relié mécaniquement au matériau de matrice de base (11, 111, 211),
un revêtement sur une surface de la plaque de base (10, 110, 210),
dans lequel
le revêtement comprend un matériau de matrice en couche (21, 121, 221) et des particules céramiques (22, 122, 222) qui sont noyées dans le matériau de matrice en couche (21, 121, 221) et reliées au matériau de matrice en couche (21, 121, 221),
et
le matériau de matrice en couche (21, 121, 221) est relié par adhérence de matière au matériau de matrice de base (11, 111, 211),
les particules céramiques (22, 122, 222) étant constituées d'un carbure métallique ou d'un oxyde métallique et le matériau de matrice en couche (21, 121, 221) étant réalisé sous forme de duromère,
**caractérisé en ce que** le revêtement présente une couche tournée vers la surface de la plaque de base (10, 110, 210) et une surface de revêtement opposée à la surface de la plaque de base (10, 110, 210), et **en ce que**, dans la zone de la surface de revêtement, une proportion volumique des particules céramiques (22, 122, 222) dans le revêtement est supérieure en particulier au moins deux fois plus grande qu'une proportion volumique des particules céramiques (22, 122, 222) dans le revêtement dans la couche tournée vers la plaque de base (10, 110, 210).

9. Matériau en plaque selon la revendication 8,
**caractérisé en ce que** les particules céramiques (22, 122, 222) ont une granulométrie
- supérieure à 10µm, de préférence supérieure à 20µm, en particulier supérieure à 30µm, et/ou
- inférieure à 300µm, de préférence inférieure à 75µm, en particulier inférieure à 50µm.

10. Matériau en plaque selon la revendication 8 ou 9,
**caractérisé en ce que** le matériau de la matrice de base (11, 111, 211) et le matériau de la matrice de la couche (21, 121, 221) sont identiques.

11. Matériau en plaque selon l'une des revendications précédentes,
**caractérisé en ce que** le revêtement comprend un matériau tissé.

12. Procédé selon l'une des revendications précédentes,
**caractérisé en ce que** le revêtement est appliqué sur la surface d'une forme de pièce à usiner, puis le matériau de matrice de base (11, 111, 211) est introduit dans la forme de pièce à usiner et est lié au revêtement.
